Europäisches Patentamt

European Patent Office

Office européen des brevets

(19)

(11) Veröffentlichungsnummer: **0 085 294**

**A1**

(12)  # EUROPÄISCHE PATENTANMELDUNG

(21) Anmeldenummer: 83100051.8

(22) Anmeldetag: 05.01.83

(51) Int. Cl.³: **F 16 B 12/46**

(30) Priorität: 13.01.82 DE 3200742

(43) Veröffentlichungstag der Anmeldung:
10.08.83 Patentblatt 83/32

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf 1(DE)

(72) Erfinder: Plass, Gotthard, Dr.
Gässchen 86
D-8601 Zapfendorf(DE)

(72) Erfinder: Schäfer, Hans-Konrad
Sonnenhang 16
D-8601 Zapfendorf(DE)

(72) Erfinder: Flüchten, Irmgard
Volmerwerther Strasse 429
D-4000 Düsseldorf 1(DE)

(72) Erfinder: Wehner, Karl-Heinrich
Oberleiterbacher Strasse 1
D-8601 Zapfendorf(DE)

(54) Kunststoffbeschlagteil und dessen Verwendung.

(57) Es wird ein Kunststoffbeschlagteil (1) für eine Steckverbindung zum lösbaren Kuppeln von Holzteilen (8, 16) beschrieben. Das Beschlagteil (1) soll so ausgebildet werden, daß die herzustellende Verbindung bei normalem Transport und normaler Belastung geschlossen bleibt, bei Bedarf jedoch ohne Werkzeug und ohne Beschädigung der Holzteile zu trennen ist. Erfindungsgemäß besteht das Kunststoffbeschlagteil (1) aus einem in eine Nut (6) eines Holzteils (16) einzusetzenden Steg (3) und einer an eine Längskante des Stegs mittig angeformten, elastischen Doppelwelle (2). Mit Hilfe der an einer Seitenwand (7) eines Einstecklochs über den Steg (3) zu arretierenden Doppelwelle (2) kann ein in das Loch einzusetzendes Holzteil (8) festgeklemmt werden.

Fig. 3

**0085294**
HENKEL KGaA
ZR-FE/Patente
Bor/C

Patentanmeldung
D 6437 EP

## "Kunststoffbeschlagteil und dessen Verwendung"

Die Erfindung betrifft ein Kunststoffbeschlagteil für eine Steckverbindung zum lösbaren Kuppeln von Holzteilen, welches über eine Rifflung bzw. Verzahnung im Holz zu fixieren ist. Sie betrifft ferner die Verwendung des Kunststoffbeschlagteils als federndes oder einrastendes Klemmteil einer Steckverbindung.

In bisher bekannten Holzverbindungen vorgenannter Art werden die Teile durch loses Zusammenstecken miteinander gekuppelt. Diese Verbindungen lösen sich schon bei sehr geringer Belastung. Andere Holzverbindungen werden durch Nageln oder Schrauben hergestellt und können nur mit Hilfe eines Werkzeugs getrennt werden. Beim Trennen ist häufig eine Beschädigung des Holzes in Kauf zu nehmen.

Der Erfindung liegt die Aufgabe zugrunde, eine steckbare Holzverbindung zu schaffen, die bei normalem Transport und bei normaler Belastung geschlossen bleibt, bei Bedarf jedoch ohne Werkzeug und ohne Beschädigung der gekuppelten Holzteile aber nur willentlich und unter größerer als zufällig normalerweise auftretender Kraftaufwendung zu trennen ist. Die erfindungsgemäße Lösung ist für das über eine Rifflung bzw. Verzahnung im Holz zu fixierende Kunststoffbeschlagteil eingangs genannter Art gekennzeichnet durch ein in einer Nut eines Holzteils über die Rifflung zu arretierenden Steg und eine an eine Längskante des Stegs mittig parallel zur Wellenlinie – insbesondere etwa längs einer wellentalähnlichen Linie –

angeformte, flächige Doppelwelle.

Durch unterschiedliche Dimensionierung der Kunststoffteile und durch geringfügige Formänderungen lassen sich erfindungsgemäß die zur werkzeuglosen Trennung notwendigen Zugkräfte je nach Einsatzbereich erhöhen oder verringern. Vorzugsweise soll die Doppelwelle so an den Steg angesetzt sein, daß die beiden Halbwellen von Steg aus gesehen konkav sind. Es ist aber auch die umgekehrte Orientierung möglich, bei der die Halbwellen von Steg aus gesehen konvex sind.

Durch die Erfindung wird ein Beschlagsystem geschaffen, das aus verschiedenen, unterschiedlich geformten Kunststoffteilen besteht und eine stabile, jederzeit wieder lösbare Steckverbindung zweier oder mehrerer Holzteile ermöglicht. Das System beruht auf einer federnden Klemmwirkung der Kunststoffteile untereinander oder gegenüber dem Holz. Der Anpreßdruck kann dabei durch Dimensionierung oder Art des verwendeten Kunststoffmaterials auf die gewünschte Feder- oder Einrastkraft und damit auf die Halte- bzw. Auszugskraft eingestellt werden.

Die erfindungsgemäß an den Stegen angeformte Doppelwelle besitzt - vorzugsweise auf der dem Steg gegenüberliegenden Fläche - im Bereich der Wellenberge und parallel dazu verlaufende Längsnocken. Zweckmäßig werden auf jeder Einzelwelle der Doppelwelle beiderseits mit Abstand voneinander und vom Wellenbergmaximum zwei Längsnocken vorgesehen. Durch diese besondere Ausbildung der Andruckflächen des Beschlagteils wird die Haltekraft gegenüber der bei Anwendung angrenzenden Holzfläche noch erhöht.

D 6437 EP    3

Von besonderer Bedeutung für die Haltekraft und die Lösbarkeit einer erfindungsgemäß herzustellenden Verbindung ist die Elastizität des Kunststoffbeschlagteils. Dieses soll, insbesondere im Bereich der Doppelwelle, aus einem thermoplastischen Elastomer, z.B. aus dauerthermoplastischem Polymethylenoxid-Copolymer, bestehen. Für die Elastizität ist auch günstig, wenn die Doppelwelle in ihrem Hauptteil mit Abstand vom Ansatz an den Steg überall gleiche Stärke aufweist. Ferner ist es in diesem Sinne günstig, wenn die Doppelwelle in dem an den Steg angrenzenden Ansatzbereich beiderseits des Stegs eine zu den konkaven Flächen der beiden Hälften der Doppelwelle hin geöffnete Längsnut besitzt. Diese Längsnut ist aber nicht nur zum Erhöhen der Elastizität sondern auch deshalb vorteilhaft, weil die wellenseitige Kante der beiderseits des Stegs die Doppelwelle vorgesehenen Längsnuten wie in das bei Anwendung an den Steg angrenzende bzw. gegenüberliegende Holz gepreßte Keile wirken.

Wenn zwei Holzteile in einer stark auf Zug beanspruchten Verbindung miteinander zu koppeln sind, kann es gemäß weiterer Erfindung günstig sein, zwei je einen Steg aufweisende Doppelwellen im Sinne der Bildung einer zweifachen Doppelwelle mit einem Längsrand aneinander geformt herzustellen. Bei Anwendung als Verbindungsmittel zweier Bauteile mit Hilfe eines dritten Bauteils wird dann das letztere in zwei miteinander fluchtenden Schlitzen bzw. Löchern mit Hilfe je einer Hälfte der von Schlitz zu Schlitz reichenden zweifachen Doppelwelle arretiert.

Das erfindungsgemäße Beschlagteil läßt sich gemäß weiterer Erfindung als federndes Klemmteil einer Steckverbindung anwenden. Hierbei wird der Steg des Beschlagteils in eine auf einer Seitenwand eines Einsteckschlitzes bzw. -lochs vorgesehene

**0085294**
HENKEL KGaA
ZR-FE/Patente

D 6437 EP                    4

Nut so eingesetzt, daß die an der Seitenwand elastisch anliegende Doppelwelle ein in den Einsteckschlitz eingeschobenes Holzteil klemmend oder einrastend festhält. Dabei ist
es vorteilhaft, wenn das Beschlagteil in eine die gesamte
Doppelwelle aufnehmende Ausnehmung der Seitenwand des Einsteckschlitzes einzusetzen ist, deren Tiefe kleiner als die
Höhe der Doppelwelle ist. Bei Anordnung der Doppelwelle in
einer solchen Ausnehmung wird ein besonders fester, nicht
wackelnder Sitz der zu verbindenden Holzteile ineinander erreicht.

Patentanmeldung

D 6437 EP                5


Anhand der schematischen Darstellung in der Zeichnung werden
weitere Einzelheiten der Erfindung erläutert. Es zeigen:

Fig. 1    einen Schnitt durch den Kunststoffbeschlag längs
          der Linie I-I von Fig. 2;

Fig. 2    die Draufsicht auf den Kunststoffbeschlag von
          Fig. 1;

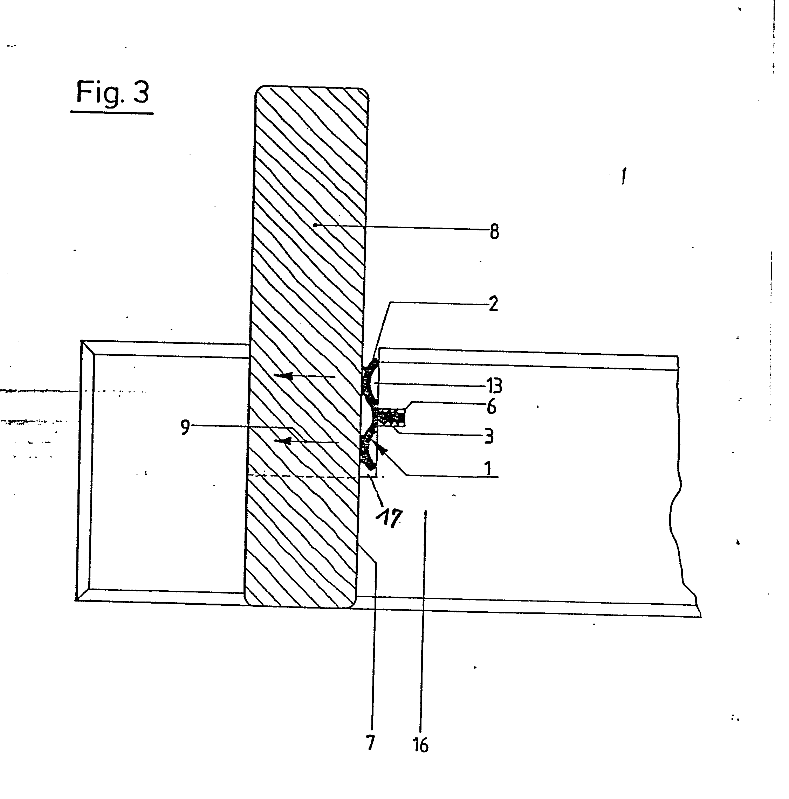

Fig. 3    ein Funktionsbeispiel des Kunststoffbeschlags von
          Fig. 1 und 2;

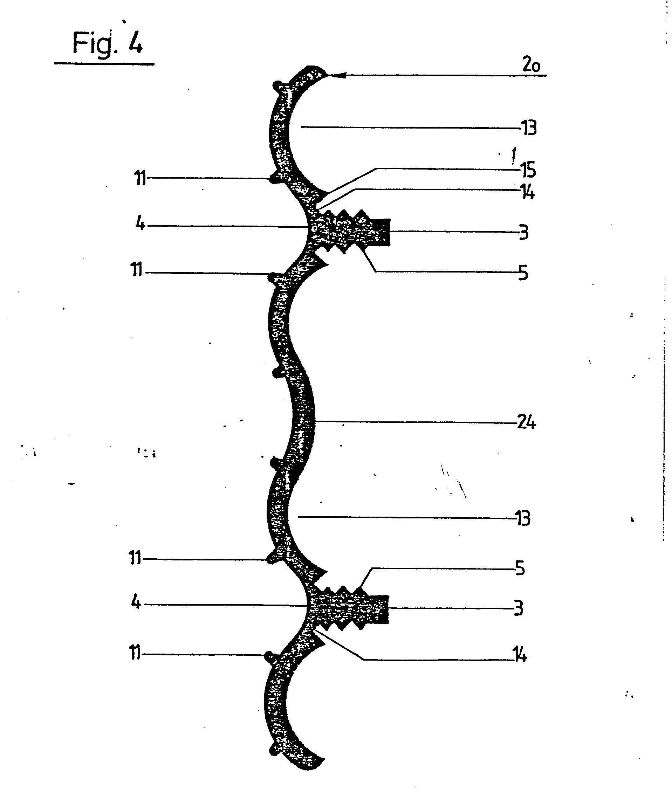

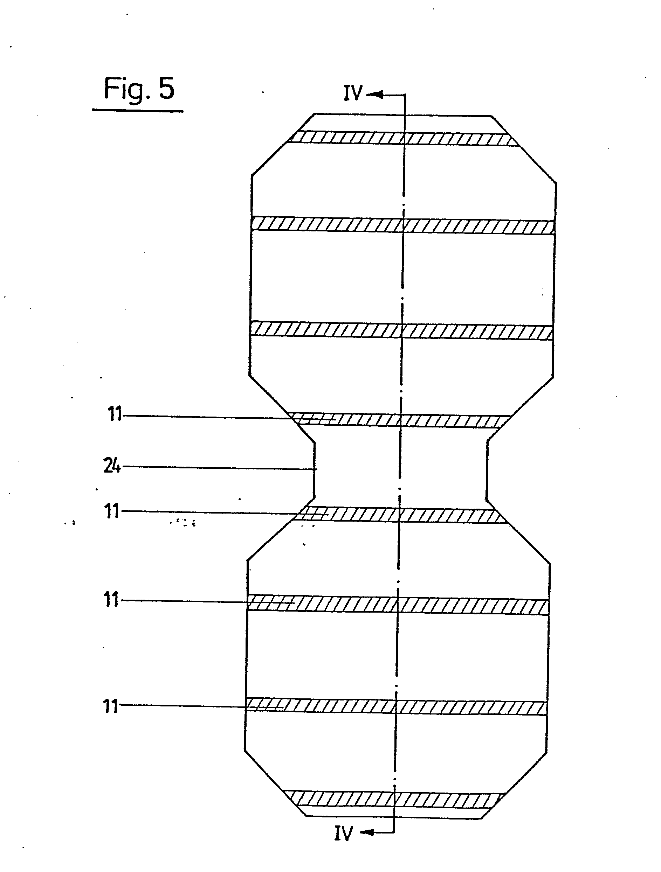

Fig. 4    einen Schnitt durch einen kombinierten Kunststoffbeschlag längs der Linie IV-IV von Fig. 5;

Fig. 5    die Draufsicht auf den Beschlag von Fig. 4; und

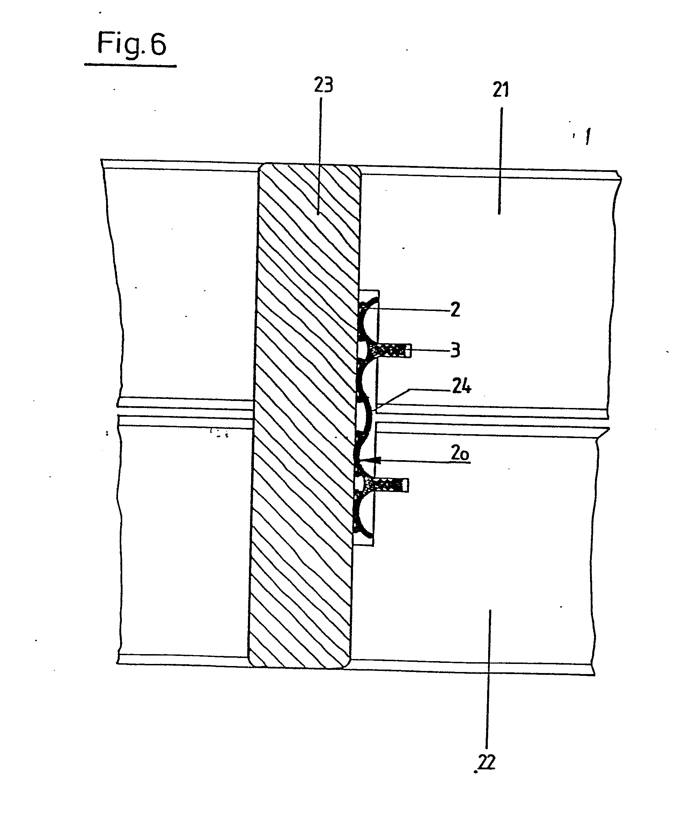

Fig. 6    einen Schnitt durch eine mit Hilfe des Kunststoffbeschlags nach Fig. 4 und 5 hergestellte Verbindung.


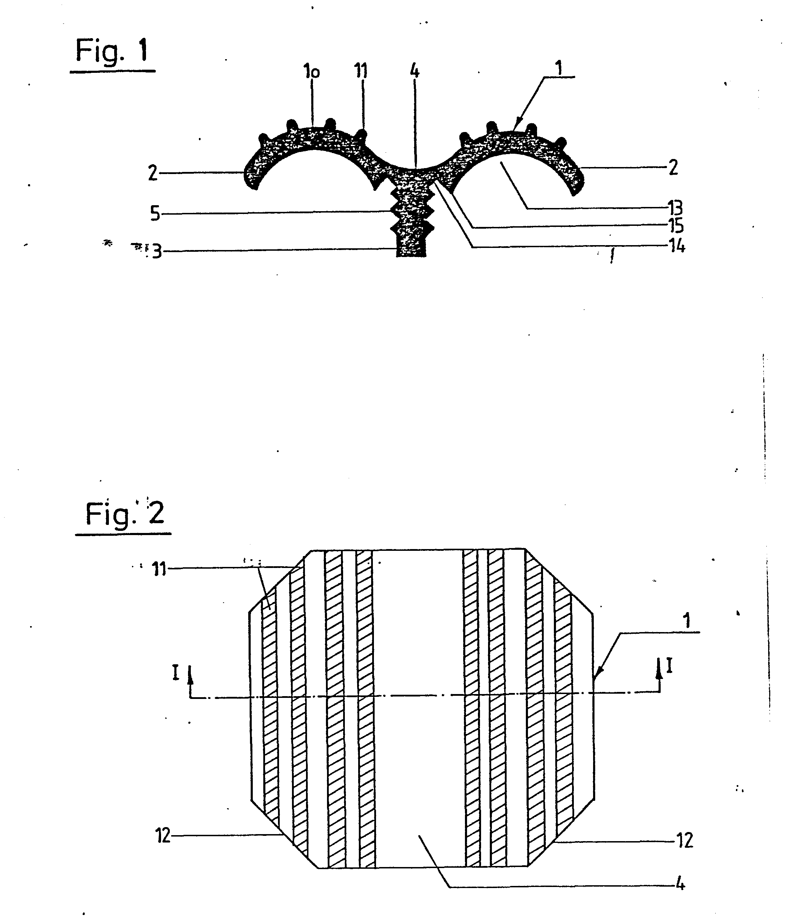

Das in Fig. 1 bis 3 insgesamt mit 1 bezeichnete Kunststoffbeschlagteil besteht aus einer Doppelwelle 2 und einem Steg
3. Letzterer ist in der Mitte des Wellentals 4 zwischen den
Einzelwellen der Doppelwelle 2 an diese angeformt. Der Steg 3
besitzt eine Verzahnung 5 zum Arretieren des Beschlagteils 1
in einer Nut 6, die auf einer Seitenwand 7 eines Einsteckschlitzes vorgesehen werden kann. In dieser Stellung kann
das Kunststoffbeschlagteil 1 ein in den Einsteckschlitz eingeschobenes Holzteil 8 klemmend festhalten. Der in Pfeilrichtung 9 gehende Anpreßdruck kann durch Dimensionierung und/
oder Art des verwendeten Kunststoffmaterials des Beschlagteils
1 eingestellt werden. Zur Verbesserung des Haftvermögens kann
die Oberseite 10 der Doppelwelle 2 mit Längsnocken 11 ausgerüstet werden. Die Längsnocken 11 sollen etwa senkrecht zur
Einschubrichtung des Holzteils 8 verlaufen. Das Einbringen des
erfindungsgemäßen Beschlagteils 1 in den jeweiligen Einsteck-

D 6437 EP                                      6

schlitz wird erleichtert, wenn die Doppelwelle an ihren vier Ecken 12 im Winkel von etwa 45° abgeschrägt ist.

Mit Hilfe des erfindungsgemäßen Beschlagteils 1 ist eine Steckverbindung zu bilden, die einem normalen Transport oder einer normalen Belastung ohne ungewolltes Öffnen widersteht, bei Bedarf jedoch ohne Werkzeug und ohne Beschädigung zu lösen ist. Bei der Doppelwelle 2 wird dieses Ziel dadurch erreicht, daß die beiden Wellenbogen überall etwa gleiche Wandstärke besitzen und daher wegen des unter ihnen verbleibenden Freiraums 13 einer Kraft 9 federnd ausweichen können. Die Elastizität wird noch dadurch erhöht, daß die Doppelwelle 2 in dem an den Steg 3 angrenzenden Ansatzbereich beiderseits des Stegs 3 eine Längsnut 14 besitzt.

Die wellenseitigen Kanten 15 der beiderseits des Stegs 3 in der Doppelwelle 2 vorgesehenen Längsnuten 14 wirken wie Keile auf das bei Anwendung an den Steg 3 angrenzende Holz der Seitenwand 7. Diese Keile pressen sich in das Holz und hindern so beim Einbringen des Beschlags 1 in das Holzteile 16 ein Spalten. Dieselbe Wirkung haben die beiden Längsnuten 14 auch dann, wenn beim Zusammenfügen der Teile größerer Druck auf die Halb- bzw. Einzelwellen des Beschlags 1 ausgeübt wird. Ein besonders fester und wackelfreier Sitz des Holzteils 8 im Schlitz des Holzteils 16 wird erreicht, wenn das Beschlagteil 1 in einer Ausnehmung 17 der Seitenwand 7 verankert wird. Die Tiefe der Ausnehmung soll dabei dem Maß der elastischen Zusammendrückbarkeit des Beschlagteils entsprechend geringer als die Dicke des letzteren sein.

Ein weiteres Ausführungsbeispiel des erfindungsgemäßen Kunststoffbeschlagteils wird in den Fig. 4 bis 6 dargestellt. Im

. . .

0085294
HENKEL KGaA
ZR-FE/Patente

D 6437 EP    7

Prinzip besteht dieser Beschlag aus einer Verbindung von zwei Beschlagteilen 1 gemäß Fig. 1 bis 3. Alle Aussagen zu diesem Beschlag gelten daher auch für die weitere Ausgestaltung.

Der insgesamt mit 20 bezeichnete Beschlag nach Fig. 4 bis 6 kann zur Verbindung von zwei sehr stark auf Zug beanspruchten Holzteilen 21 und 22 eingesetzt werden, wenn die Kombination zweier einfacher Kunststoffbeschläge 1 nicht widerstandsfähig genug sein sollte. Zu der Haltekraft des jeweiligen Verbindungsholzteils 23 addiert sich dann noch diejenige der die beiden Einzelbereiche des Kunststoffbeschlags 20 verbindenden Brücke 24. Die beiden Beschläge unterscheiden sich ferner in der Montage, während nämlich der Beschlag 20 erst nach dem Zusammensetzen der Teile seitlich einzupressen oder einzuschlagen ist, wird der Kunststoffbeschlag 1 vor dem Zusammensetzen der Teile in den jeweiligen Einsteckschlitz eingesetzt. Die Verbindung nach Fig. 6 kann daher im Gegensatz zu derjenigen nach Fig. 3 erst nach Demontage des Beschlags 20 wieder gelöst werden.

Die erfindungsgemäßen Kunststoffbeschläge, mit deren Hilfe eine Art "Einrast- oder Klickverschluß" für ineinanderzusteckende Bauteile herzustellen ist, können vorzugsweise dort eingesetzt werden, wo eine Demontage gewünscht ist und besondere Werkzeuge nicht zur Verfügung stehen. Das gilt vor allem im Bereich des Hobbyhandwerks, z.B. beim Herstellen von Gartenhäusern, Geräteschuppen, Pergolagerüsten, Gartenbänken und ähnlichem.

*8*

0085294

HENKEL KGaA
ZR-FE/Patente

D 6437 EP

Bezugszeichenliste

 1 = Kunststoffbeschlagteil

 2 = Doppelwelle

 3 = Steg

 4 = Wellental

 5 = Verzahnung

 6 = Nut

 7 = Seitenwand

 8 = Holzteil

 9 = Pfeil

10 = Oberseite

11 = Längsnocken

12 = abgeschrägte Ecken

13 = Freiraum

14 = Längsnut

15 = Kante

16 = Holzteil

17 = Ausnehmung

20 = Kunststoffbeschlag (Fig. 4 bis 6)

21)
22) = Holzteile

23 = Verbindungsholzteil

24 = Brücke

D 6437 EP                    /

P a t e n t a n s p r ü c h e

1. Kunststoffbeschlagteil (1, 20) für eine Steckverbindung zum lösbaren Kuppeln von Holzteilen (8, 16), welches über eine Rifflung bzw. Verzahnung (5) im Holz (16) zu fixieren ist, gekennzeichnet durch einen in einer Nut (6) eines Holzteils (16) über die Rifflung (5) zu arretierenden Steg (3) und eine an eine Längskante des Stegs (3) mittig parallel zur Wellenlinie angeformte, flächige Doppelwelle (2).

2. Beschlagteil nach Anspruch 1, dadurch gekennzeichnet, daß die Doppelwelle (2) im Bereich der Wellenberge und parallel dazu verlaufende Längsnocken (11) besitzt.

3. Beschlagteil nach Anspruch 2, dadurch gekennzeichnet, daß auf jeder Einzelwelle der Doppelwelle (2) beiderseits mit Abstand vom voneinander und Maximum des Wellenbergs mindestens eine Längsnocke (1) vorgesehen ist.

4. Beschlagteil nach einem oder mehreren der Ansprüche 1 bis 3, dadurch gekennzeichnet, daß die Doppelwelle (2) in der Draufsicht - parallel zur Stegebene - etwa rechteckig bzw. quadratisch ausgebildet aber an den Ecken (12), vorzugsweise im Winkel von 45°, abgeschrägt ist.

5. Beschlagteil nach einem oder mehreren der Ansprüche 1 bis 4, dadurch gekennzeichnet, daß die Doppelwelle (2) in ihrem Hauptteil mit Abstand vom Ansatz an den Steg (3) etwa überall gleiche Stärke besitzt.

D 6437 EP

6. Beschlagteil nach einem oder mehreren der Ansprüche 1 bis 5, dadurch gekennzeichnet, daß die Doppelwelle (2) in dem an den Steg (3) angrenzenden Ansatzbereich beiderseits des Stegs eine Längsnut (14) besitzt.

7. Beschlagteil nach Anspruch 6, dadurch gekennzeichnet, daß die wellenseitigen Kanten (15) der beiderseits des Stegs (3) in der Doppelwelle (2) vorgesehenen Längsnuten (14) als auf das bei Anwendung an den Steg (3) angrenzende oder dem Steg gegenüberliegende Holz wirkende Keile ausgebildet sind.

8. Beschlagteil nach einem oder mehreren der Ansprüche 1 bis 7, dadurch gekennzeichnet, daß zumindest die Doppelwelle (2) selbst aus thermoplastischem Elastomer, insbesondere aus dauerthermoplastischem Polymethylenoxid-Copolymer, besteht.

9. Beschlagteil nach einem oder mehreren der Ansprüche 1 bis 8, dadurch gekennzeichnet, daß zwei je einen Steg aufweisende Doppelwellen im Sinne der Bildung einer zweifachen Doppelwelle mit einem Längsrand aneinander geformt sind (Fig. 4).

10. Verwendung des Beschlagteils nach einem oder mehreren der Ansprüche 1 bis 9 als federndes Klemmteil einer Steckverbindung, wobei der Steg (3) des Beschlagteils (1) in eine auf einer Seitenwand (7) eines Einsteckschlitzes bzw. -lochs vorgesehene Nut (6) so eingesetzt wird, daß die an der Seitenwand (7) elastisch anliegende Doppelwelle (2) ein in den Einsteckschlitz eingeschobenes Holzteil (8) klemmend festhält.

11. Verwendung nach Anspruch 10, dadurch gekennzeichnet, daß das Beschlagteil (1) in eine die gesamte Doppelwelle (2) aufnehmende Ausnehmung (17) der Seitenwand (7) des Einsteck-

**0085294**
HENKEL KGaA
ZR-FE/Patente

D 6437 EP

schlitzes eingesetzt wird, deren Tiefe um das Maß der elastischen Zusammendrückbarkeit kleiner als die Höhe der Doppelwelle (2) ist.

12. Verwendung nach Anspruch 10 oder 11 des Beschlagteils nach einem oder mehreren der Ansprüche 1 bis 9 als Verbindungsmittel zweier Bauteile (21, 22) mit Hilfe eines dritten Bauteils (23), wobei letzteres zugleich in zwei fluchtenden Schlitzen bzw. Löchern der ersteren Bauteile mit Hilfe je einer einfachen oder der zweifachen Doppelwelle (1, 20) zu arretieren ist.

Patentanmeldung

D 6437 EP

HENKEL KGaA
ZR-FE-Patente

0085294

Fig. 1

Fig. 2

Patentanmeldung

D 6437 EP

2/5

HENKEL KGaA
ZR-FE/Patente

0085294

# Fig. 3

HENKEL KGaA
ZR-FE/Patente

0085294

## Fig. 4

Patentanmeldung

D 6437 EP

4/5

HENKEL KGaA
ZR-FE/Patente

0085294

## Fig. 5

0085294

## Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-U-7 401 856 (RÖHR & CO., MÖBELFABRIK) * Figuren 5, 6 * | 1-3,10 | F 16 B 12/46 |
| Y | DE-C- 213 397 (TREECK) * Figur 4 * | 1,10 | |
| Y | DE-B-2 008 785 (X. FREDE, MÖBELFABRIK) * Figur 1 * | 1-3,10 | |
| Y | DE-U-1 974 803 (OESEDER MÖBELINDUSTRIE M. WIEMANN) * Figuren 1-3 * | 1,10 | |
| Y | DE-U-7 047 092 (ITW-ATECO) * Figuren 1, 3 * | 1,10 | RECHERCHIERTE SACHGEBIETE (Int. Cl. 3) |
| Y | DE-U-7 609 575 (NADEL- UND DRAHTWARENFABRIK E. BIERBACH) * Figur 1 * | 1,10 | F 16 B 2/00 F 16 B 5/00 F 16 B 12/00 |
| Y | CH-A- 404 906 (C. HOLZAPFEL) * Figuren 1-3 * | 1,10 | |
| Y | FR-A-1 205 536 (ILLINOIS TOOL WORKS) * Figur 9 * | 1,10 | |

Der vorliegende Recherchenbericht wurde für alle Patentansprüche erstellt.

| Recherchenort BERLIN | Abschlußdatum der Recherche 31-03-1983 | Prüfer ZAPP E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82